# FASCICULE DE BREVET EUROPEEN

(11) **EP 1 162 473 B1**
(45) Date de publication et mention de la délivrance du brevet: **13.12.2006**
(21) Numéro de dépôt: 01401438.5
(22) Date de dépôt: 01.06.2001
(51) Int. Cl.: G01S 3/50, G01S 3/04, G06E 3/00

(54) **Mesureur différentiel de temps de propagation d'une onde et dispositif de repérage de la direction de propagation d'une onde**
Laufzeitdifferenzmesser und Peilanordnung
Time difference of arrival meter and direction finding device

(30) Priorité: 06.06.2000 FR 0007236
(43) Date de publication de la demande: 12.12.2001
(73) Titulaire: Thales, 75008 Paris (FR)
(72) Inventeur: Tonga-Goldstein, Sylvie, 94117 Arcueil Cedex (FR); Dolfi, Daniel, 94117 Arcueil Cedex (FR); Huignard, Jean-Pierre, 94117 Arcueil Cedex (FR); Chazelas, Jean, 94117 Arcueil Cedex (FR); Granger, Guillaume, 94117 Arcueil Cedex (FR); Sape, Philippe, 94117 Arcueil Cedex (FR)
(74) Mandataire: Lucas, Laurent Jacques

(56) Documents cités:
- EP-A- 0 505 235
- WO-A-86/07451
- GB-A- 2 327 001
- US-A- 4 888 593
- DOLFI D ET AL: "OPTICAL ARCHITECTURES FOR PROGRAMMABLE FILTERING AND CORRELATION OF MICROWAVE SIGNALS" IEEE TRANSACTIONS ON MICROWAVE THEORY AND TECHNIQUES,US,IEEE INC. NEW YORK, vol. 45, no. 8, PART 02, 1 août 1997 (1997-08-01), pages 1467-1471, XP000696779 ISSN: 0018-9480

## Description

La présente invention concerne un mesureur différentiel de l'intervalle de temps qui sépare l'arrivée d'une même onde sur deux antennes disposées à une certaine distance l'une de l'autre. Ces mesureurs sont généralement utilisés en association avec un réseau d'antennes pour repérer la direction de propagation d'une onde reçue par le réseau, cette onde pouvant être hertzienne, acoustique, sismique...

L'une des méthodes de réalisation de ces mesures consiste en l'utilisation de circuits électroniques, tels que les circuits hyperfréquences, qui analysent la phase et/ou l'amplitude des signaux reçus par les antennes du réseau. Le repérage de la direction de propagation d'une onde en trois dimensions avec les mesureurs connus nécessite au moins cinq antennes en champ lointain et sept en champ proche. De plus, la mesure de la phase obtenue peut être ambiguë (modulo 2π près).

Une demande de brevet EP-A-0 505 235 divulgue un procédé d'intercorrélation large bande.

La présente invention permet de pallier ou, pour le moins, de réduire ces inconvénients en effectuant un traitement optique des signaux reçus par les antennes permettant d'obtenir une mesure différentielle du temps de propagation d'une onde et de repérer la direction de propagation de cette onde. Le nombre d'antennes utilisées pour le repérage de la direction de propagation peut alors, éventuellement, être limité à trois antennes dans un champ lointain et à cinq antennes dans un champ proche pour un repérage trois dimensions.

A cet effet, l'invention a pour objet un mesureur différentiel de temps de propagation d'une onde, tel que défini par la revendication 1.

Ce mesureur utilise une méthode de mesure différentielle de temps de propagation d'une onde, pour mesurer l'intervalle entre l'instant d'arrivée d'une même onde sur deux antennes situées en des endroits distincts, caractérisée en ce qu'un premier faisceau lumineux est modulé par l'information provenant de la première antenne puis superposé au deuxième faisceau lumineux, qui a été modulé par l'information provenant de la seconde antenne puis retardé par sous-faisceau sur des durées différentes, tel que le faisceau obtenu par cette superposition présente une partie plus lumineuse correspondant à un sous-faisceau de retard propre connu et égal à ladite mesure.

L'invention propose aussi un dispositif de repérage de la direction de propagation d'une onde caractérisé en ce qu'il comporte n (n entier au moins égal à deux) de ces mesureurs différentiels ayant la partie du dispositif source fournissant le premier faisceau lumineux et une des antennes en commun.

Les caractéristiques et avantages de l'invention apparaîtront plus clairement à la lecture de la description, faite à titre d'exemple, et des figures s'y rapportant qui représentent :
- Figure 1(a), un schéma de base d'une première variante du mesureur différentiel utilisant une seule source selon l'invention,
- Figure 1(b), un schéma de base d'une seconde variante du mesureur différentiel utilisant deux sources selon l'invention,
- Figure 2(a), un premier exemple de réalisation du mesureur différentiel avec retardateur spatial selon l'invention,
- Figure 2(b), un second exemple de réalisation du mesureur différentiel avec fibre dispersive selon l'invention,
- Figure 3, un schéma partiel plus détaillé du mesureur différentiel utilisant une source laser accordable.
- Figure 4, un exemple de réalisation du dispositif de repérage de la direction d'une onde selon l'invention,
- Figure 5, un schéma partiel plus détaillé du dispositif de repérage utilisant une source monochromatique.

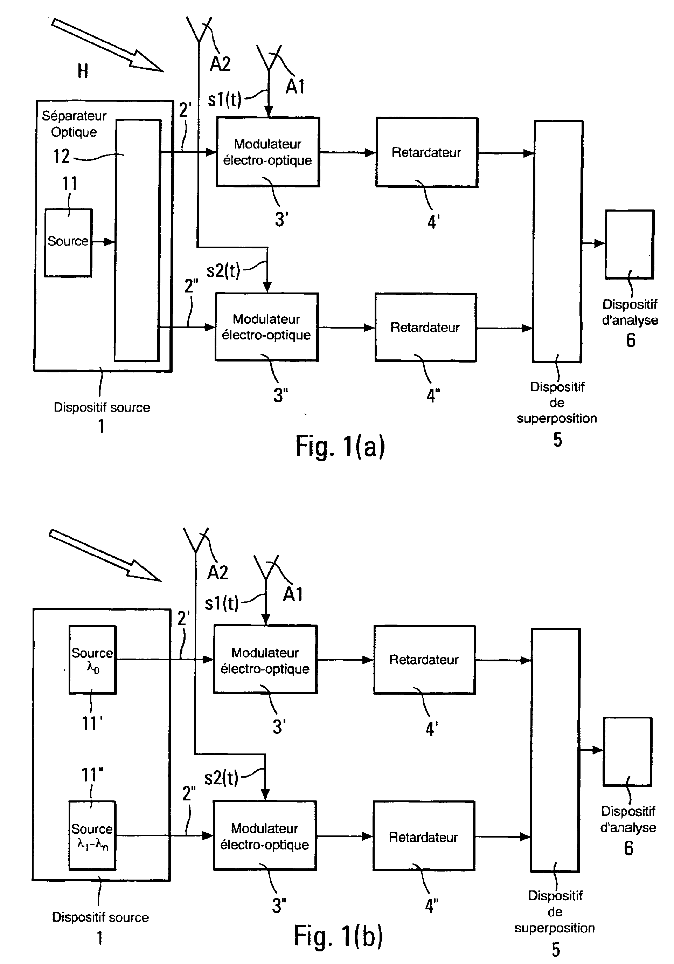

La figure 1(a) montre un premier exemple de mesureur différentiel selon l'invention. L'intervalle de temps mesuré est celui qui sépare l'instant d'arrivée d'une même onde hertzienne H qui se propage, selon une direction donnée, sur deux antennes A1 et A2 situées en des endroits distincts.

Au sein du dispositif source 1, une source de lumière monochromatique 11, telle que, par exemple, un laser semi-conducteur ou un laser solide pompé, fournit, via des fibres optiques, un faisceau lumineux monomode à un séparateur optique 12, tel qu'un coupleur optique par exemple. Ce séparateur optique 12 sépare le faisceau reçu en deux faisceaux 2' et 2", préférentiellement de même amplitude. Le faisceau 2', respectivement 2", est dirigé, par fibres optiques, vers l'entrée optique du modulateur électro-optique 3', respectivement vers l'entrée optique du modulateur électro-optique 3" de caractéristiques identiques ou semblables à celles du modulateur électro-optique 3'.

Les signaux électriques s1(t) et s2(t) produits, respectivement, par les antennes A1 et A2 lors de la réception de l'onde H sont appliqués sur les entrées de modulation respectives des modulateurs électro-optiques 3' et 3". Le signal électrique s1(t) provenant de l'antenne A1, respectivement le signal électrique s2(t) provenant de l'antenne A2, vient moduler le faisceau lumineux 2', respectivement le faisceau 2", issu du séparateur optique 12. Le modulateur électro-optique module, par exemple, le faisceau lumineux présent sur son entrée optique à la fréquence du signal électrique présent sur son entrée de modulation. Les faisceaux issus des modulateurs électro-optiques 3' et 3" deviennent ainsi représentatifs, respectivement, des signaux électriques s1(t) et s2(t).

Le retardateur 4" fait subir des retards τᵢ de différentes durées au faisceau issu du modulateur 3" et fournit donc un faisceau lumineux qui peut être considéré comme comportant plusieurs sous-faisceaux SFᵢ avec chacun son retard τᵢ propre. Les valeurs des durées des retards τᵢ sont choisies entre deux valeurs extrêmes dont l'écart est au plus égal à deux fois le temps de propagation d'une onde plane d'une antenne à l'autre le long de la droit joignant ces deux antennes. Le retardateur 4' fait subir un retard unique τₘ au faisceau lumineux issu du modulateur 3' tel que sa durée soit égale à celle du retard médian appliqué au faisceau issu du modulateur 3" par le retardateur 4".

Un dispositif de superposition 5 superpose le faisceau en sortie du retardateur 4' au faisceau en sortie du retardateur 4".

Après superposition, le faisceau résultant présente une intensité lumineuse maximale là où (ou lorsque) le retard τᵢ imposé par le retardateur 4" correspond au temps de propagation de l'onde pour passer de l'antenne A2 à l'antenne A1 ou inversement en fonction de l'inclinaison du plan d'onde relativement à la droite joignant ces deux antennes. Un dispositif d'analyse 6, placé en sortie du dispositif de superposition 5, repère les différentes parties Pᵢ du faisceau résultant de la superposition correspondant aux sous-faisceaux SFᵢ précités et détermine la partie Pᵢ où l'intensité lumineuse est maximale. Ce dispositif d'analyse comporte, par exemple, une barrette de photodétecteurs ou une matrice de photodétecteurs pour effectuer les différentes tâches citées ci-dessus.

La figure 1(b) montre un deuxième exemple de mesureur différentiel. Dans ce cas, le dispositif source est composé de deux sources 11' et 11". La première source 11' est une source monochromatique qui fournit un faisceau lumineux 2'. Ce faisceau lumineux 2' est modulé dans le modulateur électro-optique 3' par le signal électrique s1(t) provenant de l'antenne A1 lors de la réception de l'onde H. La seconde source 11" est une source large bande qui fournit un faisceau lumineux 2". Ce faisceau lumineux 2" est modulé dans le modulateur électro-optique 3" par le signal électrique s2(t) provenant de l'antenne A2 lors de la réception de l'onde H. Le retardateur 4" fait subir des retards τᵢ de durées fonction des différentes longueurs d'onde λᵢ des sous-faisceaux SFᵢ composant le faisceau en sortie du modulateur 3". Les valeurs des durées des retards τᵢ sont choisies entre deux valeurs extrêmes dont l'écart est au plus égal à deux fois le temps de propagation d'une onde plane d'une antenne à l'autre le long de la droit joignant ces deux antennes. Le retardateur 4' fait subir un retard unique τₘ au faisceau lumineux issu du modulateur 3' tel que sa durée soit égale à celle du retard médian appliqué au faisceau issu du modulateur 3" par le retardateur 4". Le faisceau lumineux en sortie du retardateur 4" est superposé au faisceau en sortie du retardateur 4' par le dispositif 5. Le dispositif 6 vient ensuite analyser le faisceau lumineux résultant de la superposition afin de déterminer le sous-faisceau SFᵢ le plus lumineux. La longueur d'onde λᵢ correspondant au sous-faisceau SFᵢ le plus lumineux permet alors de connaître le temps τ₁ -τ₂ de propagation de l'onde H de l'antenne A2 vers l'antenne A1.

Considérons le cas où le temps de propagation du signal électrique s1(t), respectivement s2(t), de l'antenne A1, respectivement A2, vers le modulateur 3', respectivement 3", et/ou les temps de propagation des signaux optiques du modulateur 3', respectivement 3", vers le dispositif de superposition 5 ne sont pas égaux (sachant que, le retard apporté par le retardateur 4" n'est pas comptabilisé dans ces temps de propagation).Le dispositif d'analyse 6 devra alors tenir compte des différences de temps de propagation existantes au sein du mesureur (excepté celles induites par le retardateur 4") afin de corriger en conséquence le résultat obtenu par la recherche du sous-faisceau le plus lumineux.

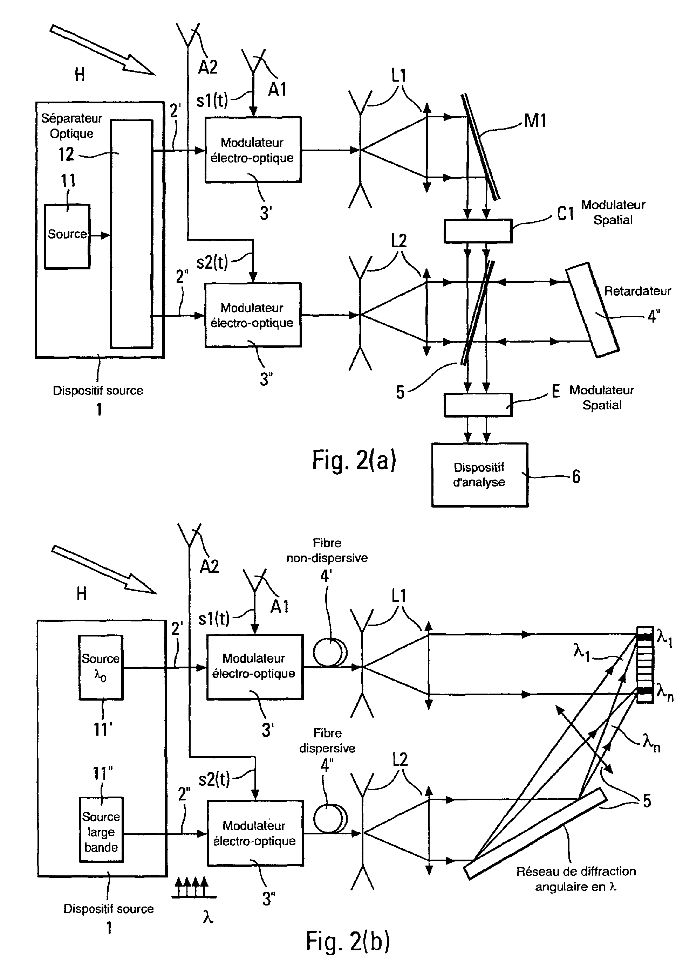

La figure 2(a) est un schéma partiel, plus détaillé que ceux des figures 1(a) et 1(b). Il concerne un exemple de réalisation du mesureur différentiel avec un retardateur spatial 4".

Le dispositif source 1 fournit deux faisceaux lumineux 2' et 2". Le faisceau lumineux 2', respectivement 2", est modulé au sein du modulateur 3', respectivement 3", par le signal électrique s1(t), respectivement s2(t), provenant de l'antenne A1, respectivement A2, lors de la réception de l'onde H. Le faisceau lumineux en sortie du modulateur 3', respectivement le faisceau en sortie du modulateur 3", est collimaté à l'infini par un collimateur L1, respectivement L2, symbolisé par deux lentilles.

Un miroir réfléchissant M1 réfléchit le faisceau lumineux collimaté par L1 pour l'envoyer sur le miroir semi-réfléchissant 5 via un modulateur spatial C1.

Le modulateur spatial C1 est un correcteur optique dont le rôle est de compenser, par équilibrage, les défauts optiques occasionnés dans les deux faisceaux à superposer, par les trajets suivis par ces faisceaux. Cette compensation est conçue, par exemple, pour que la quantité de lumière ait une valeur donnée à l'instant où les faisceaux superposés correspondant aux sous-faisceaux susmentionnés sont en phase à un multiple de T près, T période du signal reçu.

Un exemple de réalisation du modulateur C1 est un modulateur comportant un écran fait d'une matrice de cristaux liquides. Cette matrice est commandée pour présenter, par exemple, des zones plus ou moins passantes en fonction des compensations à obtenir.

Le faisceau lumineux provenant du collimateur L2 arrive directement sur le miroir semi-réfléchissant 5, qu'il traverse, tout au moins en partie, pour atteindre le retardateur spatial 4". Ce retardateur spatial 4", un rétroréflecteur par exemple, occasionne les différents retards mentionnés dans la description des figures 1(a) et 1(b). Le faisceau rétroréfléchi, qui comporte un ensemble de sous-faisceaux diversement retardés, est alors renvoyé vers le miroir semi-réfléchissant 5.

Au lieu d'utiliser un retardateur 4" qui fait subir au faisceau des retards qui varient spatialement de façon discontinue, l'utilisation d'un retardateur 4" engendrant des retards qui varient spatialement de façon continue est possible.

Le miroir semi-réfléchissant 5 superpose les deux faisceaux, le premier provenant du modulateur électro-optique 3', le deuxième provenant du retardateur 4". Les deux faisceaux sont alors analysés par le dispositif 6. Que les retards aient été engendrés de façon continue ou discontinue, le dispositif d'analyse 6 déduit le temps mis par l'onde H pour atteindre l'antenne A1 après avoir atteint l'antenne A2 du sous-faisceau dont la luminosité est maximale.

Les mesureurs peuvent être utilisés dans des systèmes, tels que les systèmes radar, où l'onde est relative à un signal périodique émis par le système lui-même et reçu après réflexion. Dans ce cas, le mesureur connaît la période T du signal reçu par les antennes du mesureur.

L'application du retard au faisceau lumineux modulé par le signal provenant de l'antenne recevant la première l'onde H n'est plus obligatoire. En effet, l'analyse des signaux pourra s'effectuer en comparant des signaux reçus correspondant à deux périodes différentes du signal émis. Ainsi, la période n+1 du signal de l'antenne A2 pourra être comparée à la période n du signal de l'antenne A1 ou inversement.

Toujours grâce à cette connaissance de la période T par le mesureur, un échantillonnage prédéterminé par durée T peut être effectué avant l'analyse par le dispositif 6. A titre d'exemple, considérons 200 sous-faisceaux décalés les uns des autres d'un retard τ tel que 200τ=2T, de manière à réaliser une analyse sur deux périodes. Si l'ensemble des sous-faisceaux est analysé par le dispositif 5 à l'aide de 1000 éléments photosensibles côte à côte, un échantillonnage de 20 par période T se fera en ne tenant compte que d'un sous-faisceau sur (200/2)/20=5, à l'aide de 1000/200=5 éléments photosensibles par sous-faisceau.

Le rôle du modulateur spatial E est celui d'obturateur. Il assure l'échantillonnage susmentionné. Un exemple de réalisation de ce modulateur E consiste en un modulateur comportant, comme le modulateur C1, un écran formé par une matrice de cristaux liquides. La nature de la matrice composant le modulateur E diffère de celle composant le modulateur C1 par le fait que la commande est une commande tout ou rien. Les zones sont passantes pour les parties à échantillonner dans le faisceau résultant de la superposition, et ne laissent pas passer la lumière constituant les autres parties du faisceau.

La lumière ayant traversé le modulateur E atteint le dispositif d'analyse 6. Un exemple de réalisation de ce dispositif d'analyse 6 est un dispositif comportant trois matrices successives faites respectivement de photodiodes, de diodes, et de filtres. Chaque photodiode est connectée à l'une des diodes, elle-même connectée à un des filtres.

Considérons le signal s1(t), respectivement s2(t), appliqué au modulateur électro-optique 3', respectivement 3", par l'antenne A1, respectivement A2. Dans cet exemple, l'ensemble des photodiodes recevant les faisceaux lumineux superposés délivre la somme des signaux électriques s1(t)+s2(t) portés, respectivement, par le faisceau lumineux de référence et le faisceau lumineux provenant du retardateur 4". Les diodes fonctionnent en régime non linéaire de manière à être sensibles au carré de la somme des signaux électriques précédents. En sortie de chaque filtre sont obtenus des signaux représentatifs du produit s1(t)s2(t) retardé d'un retard qui est fonction du sous-faisceau que le filtre considéré reçoit. La valeur maximale de ces "produits", c'est à dire les intensités lumineuses maximales susmentionnées, permet d'obtenir le temps d'arrivée de l'onde sur l'antenne A2 reliée au modulateur 3" par rapport à son temps d'arrivée sur l'antenne A1 reliée au modulateur 3'.

Dans le cas où, par exemple, la mesure différentielle s'effectuerait à partir de deux signaux sur, respectivement, deux périodes distinctes, la mesure obtenue peut être négative. Le réglage du dispositif d'analyse se fera alors de telle manière que la zone correspondante à une mesure différentielle de temps de propagation nulle soit définie pour visualiser l'ensemble des mesures possibles (par exemple, située en zone centrale du dispositif d'analyse 6).

La figure 2(b) est un schéma partiel, plus détaillé que celui de la figure 1(b). Il concerne un exemple de réalisation du mesureur différentiel avec un retardateur 4" comportant une fibre dispersive qui présente une variation d'indice monotone dans la plage de longueur d'onde de la source 11'.

Le dispositif source 1 comporte deux sources: une source monochromatique 11 fournissant un premier faisceau lumineux 2' et une source large bande 11' fournissant un deuxième faisceau lumineux 2" composé de plusieurs longueurs d'onde comprises dans l'intervalle λ₁ à λₙ.

Le premier faisceau lumineux 2' est modulé au sein du modulateur électro-optique 3' par le signal électrique s1 (t) provenant de l'antenne A1 recevant l'onde hertzienne H. Le faisceau sortant du modulateur 3' traverse ensuite une fibre non dispersive en longueur d'onde avant d'être collimaté par le collimateur L1 représenté par deux lentilles.

Le deuxième faisceau lumineux 2" est modulé au sein d'un deuxième modulateur électro-optique 3" par un deuxième signal électrique s2(t) provenant d'une deuxième antenne A2 recevant la même onde hertzienne H. Le faisceau sortant du modulateur 3" traverse une fibre dispersive 4" en longueur d'onde avant d'être collimaté par le collimateur L2 représenté par deux lentilles. La fibre dispersive 4" induit un retard τᵢ du sous-faisceau de longueur d'onde λᵢ en fonction de la longueur d'onde λᵢ de ce sous-faisceau. Cette fonction τᵢ = f(λᵢ) peut être continue ou discontinue. Le second faisceau lumineux en sortie du collimateur L2 vient se réfléchir sur un réseau de diffraction angulaire en longueur d'onde λ. Il est, ensuite, focalisé à l'aide d'une lentille au sein du dispositif de superposition 5 avant d'être reçu par le dispositif d'analyse 6 comportant un réseau de photodétecteurs. Chaque zone du réseau 6 correspondant à un faisceau de longueur d'onde donné par le réseau de diffraction angulaire du dispositif de superposition 5.

Le réseau du dispositif d'analyse 6 reçoit aussi le premier faisceau provenant du collimateur L1. La zone d'intensité lumineuse maximale du réseau du dispositif d'analyse 6 correspond alors à une longueur d'onde λᵢ donnée correspondant elle-même à un retard τᵢ connu dépendant de la fibre dispersive 4" utilisée. Ce retard τᵢ est le temps mis par l'onde H ayant atteint l'antenne A2 pour arriver à l'antenne A1.

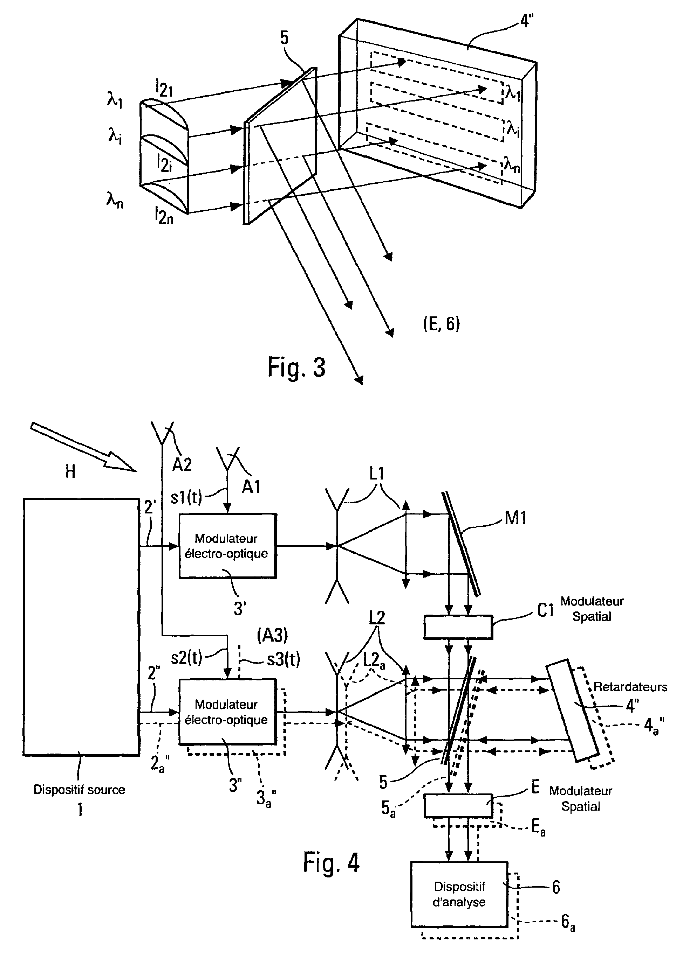

La figure 3 montre une vue en perspective d'un exemple de réalisation d'une variante du mesureur différentiel de temps de propagation d'une onde utilisant un laser accordable comme deuxième source 11" au sein du dispositif source 1.

Le deuxième faisceau lumineux provenant du deuxième modulateur 3" comprend les longueurs d'onde λ₁ à λₙ. Il existe alors plusieurs variantes possibles.

Dans la première, le deuxième faisceau est collimaté, puis il traverse le miroir semi-réfléchissant avant de se réfléchir sur un rétroréflecteur comportant, par exemple, un réseau gravé avec des strates de pas différents adaptés à chaque longueur d'onde λᵢ du laser accordable. Une variation de longueur d'onde entraîne une variation de l'angle de réflexion sur le réseau du retardateur 4". Les sous-faisceaux de longueur d'onde λᵢ sont alors réfléchis sous un angle θᵢ dépendant de leur longueur d'onde. L'utilisation d'un collimateur est alors nécessaire avant l'échantillonnage par le modulateur spatial E.

La figure 3 correspond à une autre variante, dans laquelle chacun des sous-faisceaux de longueur d'onde donnée λᵢ vient traverser une partie donnée L2i de la lentille convergente L2. Puis l'ensemble du faisceau traverse le miroir semi-réfléchissant 5 avant de se réfléchir sur le rétroréflecteur du retardateur 4" qui entraîne des retards τᵢ fonction de la longueur d'onde λᵢ du sous-faisceau qu'il réfléchit. Les retards ainsi obtenus peuvent être mieux adaptés à la mesure à effectuer. Le rétroréflecteur comporte, par exemple, un réseau gravé avec des strates de pas différents adaptés à chaque longueur d'onde λᵢ du laser accordable.

Le schéma de la figure 4 est un exemple de dispositif de repérage de la direction de propagation d'une onde selon l'invention. Ce dispositif est composé de deux mesureurs ayant la partie du dispositif source 1 fournissant le premier faisceau 2', et l'antenne A1 fournissant le signal électrique s1(t) qui vient moduler ce premier faisceau 2' en commun. Le premier mesureur est tracé en trait plein, et le deuxième mesureur, dans sa partie qui lui est propre, est tracé en pointillé et a ses éléments référencés par un "a". Le fait de disposer les deux mesureurs l'un au-dessus de l'autre, comme cela apparaît dans la figure, permet de proposer un matériel compact mais cette disposition n'est nullement indispensable au fonctionnement de chacun des deux mesureurs.

Ce dispositif prévu pour être couplé à trois antennes est utilisé dans le cas d'ondes dont les fronts peuvent être considérés comme plans car provenant d'une source relativement éloignée du dispositif de repérage de la direction de propagation de l'onde. D'une manière générale, les dispositifs de repérage de la direction de propagation d'une onde selon l'invention comporteront n mesureurs avec n entier au moins égal à deux, une partie commune au sein du dispositif source fournissant un faisceau de lumière monochromatique et recevront deux signaux de modulation dont l'un proviendra d'une antenne commune dite de référence.

Considérons, par exemple, le cas où le dispositif source 1 comporte une source monochromatique 11 et un séparateur optique 12. Ce séparateur optique 12 fournit alors trois faisceaux lumineux.

Le premier faisceau lumineux 2' commun aux deux mesureurs est modulé au sein du modulateur électro-optique 3' commun, lui aussi, aux deux mesureurs par le signal électrique s1(t) provenant de l'antenne commune A1 recevant une onde hertzienne H. Le faisceau résultant traverse alors un collimateur L1, se réfléchit ensuite sur un miroir M1, puis traverse un modulateur spatial C1, dont le rôle a été précisé lors de la description de la figure 2(a). Ce faisceau traverse alors les miroirs semi-réfléchissant 5 et 5ₐ.

Le deuxième faisceau 2" et le troisième faisceau 2"ₐ sont, quant à eux, modulés, respectivement, au sein des modulateurs électro-optiques 3" et 3"ₐ par, respectivement, les signaux électriques s2(t) et s3(t) provenant, respectivement, des antennes A2 et A3 recevant la même onde hertzienne H. Les faisceaux ainsi obtenus traversent alors, respectivement, les collimateurs L2 et L2ₐ, puis les miroirs semi-réfléchissant 5 et 5ₐ avant de se réfléchir sur les retardateurs 4" et 4"ₐ comportant, par exemple un rétroréflecteur. Les faisceaux réfléchis par les retardateurs 4" et 4"ₐ viennent se réfléchir sur, respectivement, les miroirs semi-réfléchissant 5 et 5ₐ et se superposer au premier faisceau.

Les faisceaux résultant de la superposition des deuxième et troisième faisceaux avec le premier faisceau traversent, respectivement, les modulateurs spatiaux E et Eₐ effectuant l'échantillonnage, comme cela a été décrit lors de la description de la figure 2(a), avant d'être reçus par, respectivement, les dispositifs d'analyse 6 et 6ₐ qui cherchent les deux sous-faisceaux lumineux d'intensité maximale au sein des deux faisceaux lumineux résultant de la superposition. Chacun de ces sous-faisceaux correspond à un retard égal à l'intervalle de temps entre l'arrivée de l'onde H sur l'une des antennes A2 ou A3 et sur l'antenne A1.

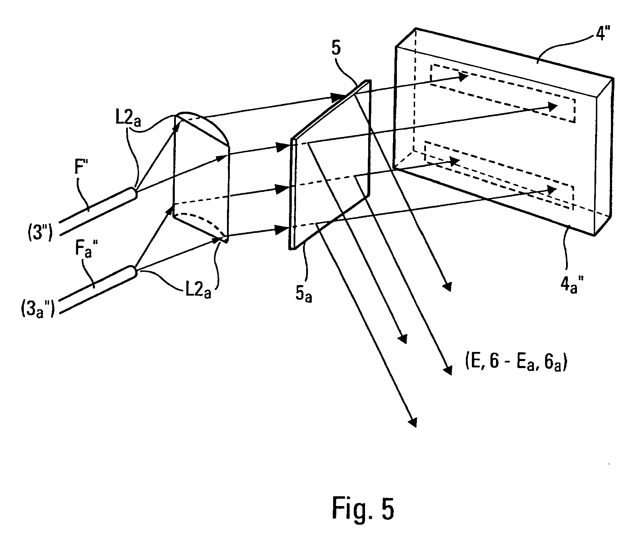

La figure 5 est une vue en perspective, d'un exemple de réalisation des collimateurs L2 et L2ₐ, des dispositifs de superposition 5 et 5ₐ et des retardateurs 4" et 4ₐ" d'un dispositif de repérage de propagation d'une onde décrit à la figure 3 dans le cas où le dispositif source 1 comporte une source monochromatique 11 et un séparateur optique 12 fournissant trois faisceaux lumineux.

Les faisceaux lumineux provenant, respectivement, des modulateurs 3" et 3ₐ" via, respectivement les fibres optiques F" et Fₐ" divergent. Une lentille convergente (lentille cylindrique par exemple) transforme ces deux faisceaux divergents en deux faisceaux à rayons parallèles. La sortie de la fibre F" et la partie haute, par exemple, de la lentille convergente forment le collimateur L2 de même que la sortie de la fibre Fₐ" et la partie basse, par exemple, de la lentille convergente forment le collimateur L2ₐ.

Un autre exemple de réalisation des collimateurs est l'utilisation de deux lentilles distinctes montées sur un même support vertical, telles que la lentille du haut fasse partie du collimateur L2 et celle du bas du collimateur L2ₐ.

Ensuite, les faisceaux lumineux collimatés traversent, respectivement, la partie haute 5 et la partie basse 5ₐ du miroir semi-réfléchissant avant de se réfléchir, respectivement, sur la partie haute 4" et la partie basse 4ₐ" d'un rétroréflecteur. Le rétroréflecteur 4", 4ₐ" comporte, par exemple, des miroirs disposés en dièdres afin de réfléchir la lumière dans la direction opposée à la direction d'arrivée de cette lumière. Un autre exemple de réalisation est un rétroréflecteur comportant plusieurs strates de matériaux d'indices différents disposées dans un plan et posées sur un miroir.

Les faisceaux provenant du rétroréflecteur se réfléchissent sur le miroir semi-réfléchissant, respectivement, sur les parties 5 et 5ₐ pour se diriger, respectivement, vers les éléments d'échantillonnage E et Eₐ et les dispositifs d'analyse 6 et 6ₐ décrits précédemment.

Une variante possible du retardateur est l'association au sein du retardateur 4" du rétroréflecteur avec des miroirs réfléchissants de manière à imposer aux faisceaux plusieurs passages sur le rétroréflecteur ce qui permet de multiplier les retards.

Une variante possible du mesureur différentiel et du dispositif de repérage de la direction de propagation d'une onde consiste en l'enlèvement de l'un ou l'autre, voire des deux, modulateurs spatiaux C1 et E car ils ne sont pas nécessaires à leur bon fonctionnement.

Une variante du dispositif de repérage de la direction de propagation d'une onde comportant l'utilisation d'un seul mesureur différentiel comportant trois antennes A1, A2 et A3. La première antenne A1reçoit un signal électrique qui vient moduler le premier faisceau lumineux 2'. Un commutateur permet de choisir le signal électrique de la deuxième ou de la troisième antenne (A2 ou A3) pour moduler le deuxième faisceau électrique. Le dispositif de repérage mesurera donc successivement le temps mis par l'onde H ayant atteint l'antenne A2 pour arriver à l'antenne A1, puis le temps mis par l'onde H ayant atteint l'antenne A3 pour arriver à l'antenne A1.

## Revendications

1. Mesureur différentiel de temps de propagation d'une onde, comportant en série un dispositif source (1) fournissant un premier faisceau lumineux (2') et, au moins, un deuxième faisceau lumineux (2"), un dispositif (5) de superposition de faisceaux lumineux, un dispositif d'analyse (6) de niveau d'intensité lumineuse, le dispositif source (1) étant relié au dispositif de superposition (5) par un premier trajet du premier faisceau lumineux (2') qui comporte un premier modulateur électro-optique (3') comportant une entrée de modulation et par un deuxième trajet du deuxième faisceau lumineux (2") qui comporte en série un second modulateur électro-optique (3") comportant une entrée de modulation et un retardateur (4"), **caractérisé en qu'**il mesure l'intervalle entre l'instant d'arrivée d'une même onde sur deux antennes situées en des endroits distincts, les entrées de modulation des premier et second modulateur étant couplés respectivement à une première et à une seconde antenne (A1, A2), le deuxième faisceau lumineux (2") étant retardé par sous-faisceau sur des durées différentes.

2. Mesureur différentiel selon la revendication précédente, **caractérisé en ce que** le dispositif source (1) comporte en série une source monochromatique (11) et un séparateur optique (12) fournissant lesdits faisceaux (2') et (2").

3. Mesureur différentiel selon la revendication 1, **caractérisé en ce que** le dispositif source (1) comporte au moins deux sources (11') et (11") fournissant chacune un desdits faisceaux lumineux (2') et (2").

4. Mesureur différentiel selon la revendication 3 **caractérisé en ce que** lesdites sources (11') et (11") sont des sources monochromatiques.

5. Mesureur différentiel selon la revendication 3 **caractérisé en ce que** la première source (11') est une source monochromatique et la seconde source (11") un laser accordable en longueur d'onde.

6. Mesureur différentiel selon l'une des revendications précédentes **caractérisé en ce que** le premier trajet lumineux comporte un retardateur supplémentaire (4') dont l'entrée est couplée à la sortie du premier modulateur électro-optique (3') générant un retard τₘ de référence.

7. Mesureur différentiel selon la revendication précédente **caractérisé en ce que** la durée du retard τₘ soit égale à celle du retard médian appliqué au faisceau issu du modulateur (3") par le retardateur (4").

8. Mesureur différentiel selon l'une des revendications précédentes, **caractérisé en ce que** le retardateur (4") génère tous les retards.

9. Mesureur différentiel selon l'une des revendications précédentes, **caractérisé en ce que** le retardateur (4") est un retardateur spatial qui fait subir au second faisceau lumineux (2") des retards qui varient spatialement de façon soit continue, soit discontinue.

10. Mesureur différentiel selon la revendication 9, **caractérisé en ce que** le retardateur spatial comporte un rétroréflecteur.

11. Mesureur différentiel selon l'une des revendications 9 ou 10, **caractérisé en ce que** le dispositif de superposition (5) comporte un miroir semi-réfléchissant tel qu'il superpose lesdits faisceaux lumineux (2') et (2"), le premier faisceau (2') provient du modulateur électro-optique (3') et traverse le miroir semi-réfléchissant, le second faisceau (2") provient du retardateur (4") et est réfléchi par le miroir semi-réfléchissant dans la même direction que le premier faisceau lumineux.

12. Mesureur différentiel selon l'une des revendications 9 à 11, **caractérisé en ce qu'**il comporte, sur le premier trajet (2'), entre le modulateur électro-optique (3') et le dispositif de superposition (5), un modulateur spatial de lumière (C1) dont le rôle est de compenser, par équilibrage, les défauts optiques des deux trajets.

13. Mesureur différentiel selon l'une des revendications 9 à 12, **caractérisé en ce qu'**il comporte, entre le dispositif de superposition (5) et le dispositif d'analyse (6), un modulateur spatial (E) dont le rôle est celui d'obturateur pour effectuer un échantillonnage spatial.

14. Mesureur différentiel selon l'une des revendications 1 à 8, **caractérisé en ce que** le retardateur (4") est une fibre dispersive en longueur d'onde.

15. Mesureur différentiel selon la revendication 14, **caractérisé en ce qu'**il comporte une fibre (4') non-dispersive en longueur d'onde sur le premier trajet (2') entre le modulateur électro-optique (3') et le dispositif de superposition (5).

16. Mesureur différentiel selon l'une des revendications 14 ou 15, **caractérisé en ce que** le dispositif de superposition (5) comporte, sur le second trajet lumineux (2"), un réseau de diffraction angulaire en longueur d'onde suivi d'un dispositif de focalisation afin de diriger ce second faisceau lumineux sur une zone précise (dépendante de la longueur d'onde de ce second faisceau (2") du dispositif d'analyse (6) éclairée par le premier faisceau lumineux (2').

17. Méthode de mesure différentielle de temps de propagation d'une onde, pour mesurer l'intervalle entre l'instant d'arrivée d'une même onde sur deux antennes situées en des endroits distincts, **caractérisée en ce qu'**un premier faisceau lumineux (2') est modulé par l'information provenant de la première antenne (A1) puis superposé au deuxième faisceau lumineux (2"), qui a été modulé par l'information provenant de la seconde antenne (A2) puis retardé par sous-faisceau sur des durées différentes, tel que le faisceau obtenu par cette superposition présente une partie plus lumineuse correspondant à un sous-faisceau de retard propre connu et égal à ladite mesure.

18. Dispositif de repérage de la direction de propagation d'une onde, **caractérisé en ce qu'**il comporte n (n entier au moins égal à deux) mesureurs différentiels selon l'une des revendications 1 à 16 ayant la partie du dispositif source (1) fournissant le premier faisceau lumineux (2') et une des antennes (A1) en commun.

19. Dispositif de repérage de la direction de propagation d'une onde selon la revendication 18, **caractérisé en ce que** la source monochromatique (11) et le séparateur optique (12) du dispositif source (1) sont communs à l'ensemble des n mesureurs et que le séparateur optique (12) fournit n+1 faisceaux lumineux, le premier desdits faisceaux étant fourni à l'ensemble des n mesureurs, les n autres faisceaux étant distribués un par mesureur, et **en ce que** le premier trajet lumineux commun aux n mesureurs comporte un premier modulateur électro-optique (3') commun aux n mesureurs comportant une entrée modulation couplée à ladite antenne (A1) commune aux n mesureurs.

20. Dispositif de repérage de la direction de propagation d'une onde selon la revendication 18, **caractérisé en ce que** le dispositif source comporte n+1 sources, une source commune à l'ensemble des n mesureurs et n sources, une par mesureur différentiel, et **en ce que** le premier trajet lumineux commun aux n mesureurs comporte un premier modulateur électro-optique (3') commun aux n mesureurs comportant une entrée modulation couplée à ladite antenne (A1) commune aux n mesureurs.

21. Dispositif de repérage de la direction de propagation d'une onde selon la revendication 18 **caractérisé en ce que** le dispositif source comporte deux sources communes à l'ensemble des n mesureurs; **en ce que** le premier trajet lumineux commun aux n mesureurs comporte un premier modulateur électro-optique (3') commun aux n mesureurs comportant une entrée modulation couplée à ladite antenne (A1) commune aux n mesureurs, et **en ce que** la seconde source soit un laser accordable commun à l'ensemble des n mesureurs, une longueur d'onde donnée du laser étant attribuée à un mesureur donné.

22. Méthode de repérage de la direction de propagation d'une onde, **caractérisée en ce que** la direction est calculée en mesurant, selon la revendication 17, l'intervalle entre l'instant d'arrivée d'une onde sur une première antenne dite de référence (A1) et les instants d'arrivée de la même onde sur d'autres antennes.

## Claims

1. Differential measurer of the propagation time of a wave, comprising in series a source device (1) supplying a first light beam (2') and at least a second light beam (2"), a device (5) for superposing light beams, a device (6) for analyzing the light intensity level, the source device (1) being connected to the superposition device (5) by a first path of the first light beam (2') which comprises a first electrooptic modulator (3') comprising a modulation input and by a second path of the second light beam (2") which comprises in series a second electrooptic modulator (3") comprising a modulation input and a retarder (4"), **characterized in that** it measures the interval between the time of arrival of the same wave on two antennas situated in different locations, the modulation inputs of the first and second modulators being coupled to first and second antennas (A1, A2) respectively, the second light beam (2") being retarded by a sub-beam for different durations.

2. Differential measurer according to the preceding claim, **characterized in that** the source device (1) comprises in series a monochromatic source (11) and an optical splitter (12) supplying the said beams (2') and (2").

3. Differential measurer according to Claim 1, **characterized in that** the source device (1) comprises at least two sources (11') and (11"), each one supplying one of the said light beams (2') and (2").

4. Differential measurer according to Claim 3, **characterized in that** the said sources (11') and (11") are monochromatic sources.

5. Differential measurer according to Claim 3, **characterized in that** the first source (11') is a monochromatic source and the second source (11") is a wavelength-tunable laser.

6. Differential measurer according to one of the preceding claims, **characterized in that** the first light path comprises an additional retarder (4'), the input of which is coupled to the output of the first electrooptic modulator (3') generating a reference delay τₘ.

7. Differential measurer according to the preceding claim, **characterized in that** the duration of the delay τₘ is equal to that of the median delay applied to the beam emanating from the modulator (3") by the retarder (4").

8. Differential measurer according to one of the preceding claims, **characterized in that** the retarder (4") generates all the delays.

9. Differential measurer according to one of the preceding claims, **characterized in that** the retarder (4") is a spatial retarder which makes the second light beam (2") undergo delays which vary spatially in either a continuous or discontinuous manner.

10. Differential measurer according to Claim 9, **characterized in that** the spatial retarder comprises a retroreflector.

11. Differential measurer according to either of Claims 9 and 10, **characterized in that** the superposition device (5) comprises a semireflecting mirror such that it superimposes the said light beams (2') and (2"), the first beam (2') comes from the electrooptic modulator (3') and passes through the semireflecting mirror, the second beam (2") comes from the retarder (4") and is reflected by the semireflecting mirror in the same direction as the first light beam.

12. Differential measurer according to one of Claims 9 to 11, **characterized in that** it comprises, on the first path (2'), between the electrooptic modulator (3') and the superposition device (5), a spatial light modulator (C1), the role of which is to compensate, by balancing, for the optical defects of the two paths.

13. Differential measurer according to one of Claims 9 to 12, **characterized in that** it comprises, between the superposition device (5) and the analysis device (6), a spatial modulator (E) the role of which is that of a shutter in order to carry out spatial sampling.

14. Differential measurer according to one of Claims 1 to 8, **characterized in that** the retarder (4") is a wavelength-dispersive fiber.

15. Differential measurer according to Claim 14, **characterized in that** it comprises a fiber (4'), which is not wavelength-dispersive, on the first path (2') between the electrooptic modulator (3') and the superposition device (5).

16. Differential measurer according to either of Claims 14 and 15, **characterized in that** the superposition device (5) comprises, on the second light path (2"), a grating for angular wavelength diffraction followed by a focusing device in order to direct this second light beam onto a specific region which is dependent on the wavelength of this second beam (2") of the analysis device (6) illuminated by the first light beam (2').

17. Method of differential measurement of the propagation time of a wave, for measuring the interval between the time of arrival of the same wave on two antennas situated in different locations, **characterized in that** a first light beam (2') is modulated by the information emanating from the first antenna (A1), then superimposed on the second light beam (2") which has been modulated by the information emanating from the second antenna (A2), then retarded by the sub-beam for different durations, such that the beam obtained by this superposition has a more intense part corresponding to a sub-beam of known actual delay and equal to the said measurement.

18. Device for identifying the propagation direction of a wave, **characterized in that** it comprises n (where n is an integer at least equal to two) differential measurers according to one of claims 1 to 16, having part of the source device (1) supplying the first light beam (2') and one of the antennas (A1) in common.

19. Device for identifying the propagation direction of a wave according to Claim 18, **characterized in that** the monochromatic source (11) and the optical splitter (12) of the source device (1) are common to all the n measurers and **in that** the optical splitter (12) supplies n + 1 light beams, the first of the said beams being supplied to all of the n measurers, the n other beams being distributed one per measurer, and **in that** the first light path common to the n measurers comprises a first electrooptic modulator (3') common to the n measurers comprising a modulation input coupled to the said antenna (A1) common to the n measurers.

20. Device for identifying the propagation direction of a wave according to Claim 18, **characterized in that** the source device comprises n + 1 sources, one source common to all the n measurers and n sources, one per differential measurer and **in that** the first light path common to the n measurers comprises a first electrooptic modulator (3') common to the n measurers comprising a modulation input coupled to the said antenna (A1) common to the n measurers.

21. Device for identifying the propagation direction of a wave according to Claim 18, **characterized in that** the source device comprises two sources common to all the n measurers; **in that** the first light path common to the n measurers comprises a first electrooptic modulator (3') common to the n measurers comprising a modulation input coupled to the said antenna (A1) common to the n measurers, and **in that** the second source is a tunable laser common to all the n measurers, a given wavelength of the laser being assigned to a given measurer.

22. Method for identifying the propagation direction of a wave, **characterized in that** the direction is calculated by measuring, according to Claim 17, the interval between the arrival time of a wave on a first antenna called a reference antenna (A1) and the arrival times of the same wave on other antennas.

## Patentansprüche

1. Wellenausbreitungszeit-Differenzmesser, der in Reihe eine Quellenvorrichtung (1), die einen ersten Lichtstrahl (2') und mindestens einen zweiten Lichtstrahl (2") liefert, eine Vorrichtung (5) zur Überlagerung von Lichtstrahlen und eine Vorrichtung (6) zur Analyse des Lichtstärkepegels aufweist, wobei die Quellenvorrichtung (1) mit der Überlagerungsvorrichtung (5) über eine erste Strecke des ersten Lichtstrahls (2'), die einen ersten elektrooptischen Modulator (3') mit einem Modulationseingang aufweist, und über eine zweite Strecke des zweiten Lichtstrahls (2") verbunden ist, die in Reihe einen zweiten elektrooptischen Modulator (3") mit einem Modulationseingang und einen Verzögerer (4") aufweist, **dadurch gekennzeichnet, dass** er das Zeitintervall zwischen dem Ankunftszeitpunkt einer gleichen Welle an zwei Antennen misst, die sich an unterschiedlichen Stellen befinden, wobei die Modulationseingänge des ersten und des zweiten Modulators mit einer ersten bzw. einer zweiten Antenne (A1, A2) gekoppelt sind, wobei der zweite Lichtstrahl (2") je Teilstrahl über verschiedene Zeitdauern verzögert wird.

2. Differenzmesser nach dem vorhergehenden Anspruch, **dadurch gekennzeichnet, dass** die Quellenvorrichtung (1) in Reihe eine monochromatische Quelle (11) und einen optischen Separator (12) aufweist, der die Strahlen (2') und (2") liefert.

3. Differenzmesser nach Anspruch 1, **dadurch gekennzeichnet, dass** die Quellenvorrichtung (1) mindestens zwei Quellen (11') und (11") aufweist, die je einen der Lichtstrahlen (2') bzw. (2") liefern.

4. Differenzmesser nach Anspruch 3, **dadurch gekennzeichnet, dass** die Quellen (11') und (11") monochromatische Quellen sind.

5. Differenzmesser nach Anspruch 3, **dadurch gekennzeichnet, dass** die erste Quelle (11') eine monochromatische Quelle und die zweite Quelle (11") ein hinsichtlich der Wellenlänge abstimmbarer Laser ist.

6. Differenzmesser nach einem der vorhergehenden Ansprüche, **dadurch gekennzeichnet, dass** die erste Lichtstrecke einen zusätzlichen Verzögerer (4') aufweist, dessen Eingang mit dem Ausgang des ersten elektrooptischen Modulators (3') gekoppelt ist, der eine Bezugsverzögerung τₘ erzeugt.

7. Differenzmesser nach dem vorhergehenden Anspruch, **dadurch gekennzeichnet, dass** die Dauer der Verzögerung τₘ gleich derjenigen der mittleren Verzögerung ist, die an dem vom Modulator (3") kommenden Strahl vom Verzögerer (4") bewirkt wird.

8. Differenzmesser nach einem der vorhergehenden Ansprüche, **dadurch gekennzeichnet, dass** der Verzögerer (4") alle Verzögerungen erzeugt.

9. Differenzmesser nach einem der vorhergehenden Ansprüche, **dadurch gekennzeichnet, dass** der Verzögerer (4") ein räumlicher Verzögerer ist, der den zweiten Lichtstrahl (2") Verzögerungen unterwirft, die räumlich entweder kontinuierlich oder diskontinuierlich variieren.

10. Differenzmesser nach Anspruch 9, **dadurch gekennzeichnet, dass** der räumliche Verzögerer einen Retroreflektor aufweist.

11. Differenzmesser nach einem der Ansprüche 9 oder 10, **dadurch gekennzeichnet, dass** die Überlagerungsvorrichtung (5) einen derartig halbreflektierenden Spiegel aufweist, dass er die Lichtstrahlen (2') und (2") überlagert, wobei der erste Strahl (2') vom elektrooptischen Modulator (3') kommt und den halbreflektierenden Spiegel durchquert, während der zweite Strahl (2") vom Verzögerer (4") kommt und vom halbreflektierenden Spiegel in der gleichen Richtung wie der erste Lichtstrahl reflektiert wird.

12. Differenzmesser nach einem der Ansprüche 9 bis 11, **dadurch gekennzeichnet, dass** er auf der ersten Strecke (2') zwischen dem elektrooptischen Modulator (3') und der Überlagerungsvorrichtung (5) einen räumlichen Lichtmodulator (C1) aufweist, dessen Aufgabe es ist, die optischen Fehler der beiden Strecken durch Ausgleich zu kompensieren.

13. Differenzmesser nach einem der Ansprüche 9 bis 12, **dadurch gekennzeichnet, dass** er zwischen der Überlagerungsvorrichtung (5) und der Analysevorrichtung (6) einen räumlichen Modulator (E) aufweist, dessen Aufgabe diejenige eines Verschlusses ist, um eine räumliche Tastung durchzuführen.

14. Differenzmesser nach einem der Ansprüche 1 bis 8, **dadurch gekennzeichnet, dass** der Verzögerer (4") eine wellenlängen-dispersive Faser ist.

15. Differenzmesser nach Anspruch 14, **dadurch gekennzeichnet, dass** er eine hinsichtlich der Wellenlänge nicht dispersive Faser (4') auf der ersten Strecke (2') zwischen dem elektrooptischen Modulator (3') und der Überlagerungsvorrichtung (5) aufweist.

16. Differenzmesser nach einem der Ansprüche 14 oder 15, **dadurch gekennzeichnet, dass** die Überlagerungsvorrichtung (5) auf der zweiten Lichtstrecke (2") ein von der Wellenlänge abhängiges Winkelbeugungsnetz gefolgt von einer Fokussiervorrichtung aufweist, um diesen zweiten Lichtstrahl in eine (von der Wellenlänge dieses zweiten Strahls (2") abhängige) präzise Zone der Analysevorrichtung (6) zu leiten, die vom ersten Lichtstrahl (2') beleuchtet wird.

17. Verfahren zur Differenzmessung der Ausbreitungszeit einer Welle, um das Zeitintervall zwischen dem Ankunftszeitpunkt einer gleichen Welle an zwei Antennen zu messen, die sich an verschiedenen Stellen befinden, **dadurch gekennzeichnet, dass** ein erster Lichtstrahl (2') von der von der ersten Antenne (A1) kommenden Information moduliert und dann dem zweiten Lichtstrahl (2") überlagert wird, der von der von der zweiten Antenne (A2) kommenden Information moduliert und dann je Teilstrahl über verschiedene Zeitdauern verzögert wurde, derart, dass der durch diese Überlagerung erhaltene Strahl einen helleren Teil aufweist, der einem bekannten Eigenverzögerungs-Teilstrahl entspricht und gleich der Messung ist.

18. Vorrichtung zur Erfassung der Ausbreitungsrichtung einer Welle, **dadurch gekennzeichnet, dass** sie n (n ist eine ganze Zahl mindestens gleich zwei) Differenzmesser nach einem der Ansprüche 1 bis 16 aufweist, die sich den Teil der Quellenvorrichtung (1), der den ersten Lichtstrahl (2') liefert, und eine der Antennen (A1) teilen.

19. Vorrichtung zur Erfassung der Ausbreitungsrichtung einer Welle nach Anspruch 18, **dadurch gekennzeichnet, dass** die monochromatische Quelle (11) und der optische Separator (12) der Quellenvorrichtung (1) für alle n Messer bestimmt sind, und dass der optische Separator (12) n+1 Lichtstrahlen liefert, wobei der erste der Strahlen an alle n Messer geliefert wird, während von den anderen n Strahlen je einer einem Messer zugeordnet wird, und dass die erste den n Messern gemeinsame Lichtstrecke einen ersten allen n Messern gemeinsamen elektrooptischen Modulator (3') aufweist, der einen Modulationseingang aufweist, der mit der den n Messern gemeinsamen Antenne (A1) gekoppelt ist.

20. Vorrichtung zur Erfassung der Ausbreitungsrichtung einer Welle nach Anspruch 18, **dadurch gekennzeichnet, dass** die Quellenvorrichtung n+1 Quellen, eine der Gesamtheit der n Messer gemeinsame Quelle und n Quellen, eine pro Differenzmesser, aufweist, und dass die erste den n Messern gemeinsame Lichtstrecke einen ersten den n Messern gemeinsamen elektrooptischen Modulator (3') aufweist, der einen Modulationseingang aufweist, der mit der den n Messern gemeinsamen Antenne (A1) gekoppelt ist.

21. Vorrichtung zur Erfassung der Ausbreitungsrichtung einer Welle nach Anspruch 18, **dadurch gekennzeichnet, dass** die Quellenvorrichtung zwei allen n Messern gemeinsame Quellen aufweist, dass die erste den n Messern gemeinsame Lichtstrecke einen ersten allen n Messern gemeinsamen elektrooptischen Modulator (3') aufweist, der einen Modulationseingang aufweist, der mit der den n Messern gemeinsamen Antenne (A1) gekoppelt ist, und dass die zweite Quelle ein abstimmbarer Laser ist, der allen n Messern gemeinsam ist, wobei eine gegebene Wellenlänge des Lasers einem gegebenen Messer zugeordnet wird.

22. Verfahren zur Erfassung der Ausbreitungsrichtung einer Welle, **dadurch gekennzeichnet, dass** die Richtung berechnet wird, indem gemäß Anspruch 17 das Zeitintervall zwischen dem Ankunftszeitpunkt einer Welle an einer ersten Bezugsantenne (A1) und den Ankunftszeitpunkten der gleichen Welle an den anderen Antennen gemessen wird.
